(19) Europäisches Patentamt
European Patent Office
Office européen des brevets

(11) **EP 3 036 823 B1**

(12) **EUROPÄISCHE PATENTSCHRIFT**

(45) Veröffentlichungstag und Bekanntmachung des Hinweises auf die Patenterteilung:
**26.12.2018 Patentblatt 2018/52**

(21) Anmeldenummer: **14771216.0**

(22) Anmeldetag: **08.09.2014**

(51) Int Cl.:
*H02M 1/32* *(2007.01)*    *H02M 7/483* *(2007.01)*
*H02M 7/797* *(2006.01)*

(86) Internationale Anmeldenummer:
**PCT/EP2014/069057**

(87) Internationale Veröffentlichungsnummer:
**WO 2015/043933 (02.04.2015 Gazette 2015/13)**

(54) **MULTILEVELUMRICHTER**

MULTILEVEL INVERTER

MUTATEUR MULTI-NIVEAUX

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.09.2013 DE 102013219466**

(43) Veröffentlichungstag der Anmeldung:
**29.06.2016 Patentblatt 2016/26**

(73) Patentinhaber: **Siemens Aktiengesellschaft**
**80333 München (DE)**

(72) Erfinder: **ECKEL, Hans-Günter**
**18059 Rostock (DE)**

(56) Entgegenhaltungen:
**WO-A1-2011/116816    WO-A1-2012/098610**
**DE-A1-102011 006 988**

**Beschreibung**

Die Erfindung bezieht sich auf ein Submodul mit den Merkmalen gemäß dem Obergriff des Patentanspruchs 1 und einen Multilevelumrichter mit den Merkmalen gemäß dem Oberbegriff des Patentanspruchs 11.

Ein derartiger Multilevelumrichter wird in dem Konferenzbeitrag "Modulares Stromrichterkonzept für Netzkupplungsanwendungen bei hohen Spannungen" (Rainer Marquardt, Anton Lesnicar und Jürgen Hildinger, Institut für elektrische Antriebstechnik, Leistungselektronik und Steuerungen der Universität der Bundeswehr München, ETG Fachtagung Bauelemente der Leistungselektronik und ihre Anwendungen, 2002, Bad Nauheim) beschrieben. Der vorbekannte Multilevelumrichter ist mit einer Mehrzahl an in Reihe geschalteten Submodulen ausgestattet, die jeweils einen ersten Schalter, einen zweiten Schalter und einen Kondensator aufweisen und in Entladephasen mittels des Kondensators Strom nach außen abgeben und in Ladephasen Strom zum Aufladen des Kondensators aufnehmen. Eine Zentraleinrichtung dient zur Steuerung der Arbeitsweise des Multilevelumrichters.

Bei vorbekannten Multilevelumrichtern besteht das Problem, dass im Falle eines Ausfalls eines der Submodule, beispielsweise im Falle eines abrupten Entladens des Kondensators, wenn fehlerhaft beide Schalter des Submoduls eingeschaltet sind, eine Zerstörung des Submoduls auftreten kann und das Submodulgehäuse platzen kann. Ein solches Platzen von Submodulgehäusen kann andere benachbarte Submodule in Mitleidenschaft ziehen, so dass diese aufgrund der mechanischen Einwirkung ebenfalls ausfallen und ihrerseits Kurzschlussströme führen. Mit anderen Worten kann es zu einer Kettenreaktion kommen, infolge derer alle Submodule des Multilevelumrichters zerstört werden.

Um das beschriebene Problem eines Aufplatzens der Submodulgehäuse bzw. eine Kettenreaktion der Zerstörung von Submodulen zu verhindern, werden vorbekannte Multilevelumrichter mit besonders stabilen Submodulgehäusen versehen; dies führt jedoch zu einem sehr hohen Gewicht der Multilevelumrichter sowie zu einem sehr hohen Materialeinsatz.

Alternativ ist bekannt, die Kapazität der Kondensatoren der Submodule so klein zu wählen, dass die im Falle eines Kurzschlussstromes auftretende Belastung in den Submodulen so gering bleibt, dass ein Aufplatzen der Submodulgehäuse vermieden wird.

Der Erfindung liegt die Aufgabe zugrunde, ein Submodul und einen Multilevelumrichter anzugeben, bei dem die oben beschriebene Problematik der Zerstörung der Submodule besonders einfach und kostengünstig vermieden, zumindest reduziert, wird.

Dokumente WO 2011/116816 A1 und DE 10 2011 006988 A1 offenbaren jeweils einen Multilevelumrichter, der mehrere in Reihe geschalteten Submodulen aufweist, wobei die Submodulen jeweils zwei Teilmodulen mit jeweils einem Kondensator aufweisen. Dokument DE 10 2011 006988 A1 offenbart auch, die zwei Kondensatoren der Teilmodulen elektrisch verbunden zu sein durch einen dritten Anschluss per Teilmodul. Diese Aufgabe wird erfindungsgemäß durch ein Submodul mit den Merkmalen gemäß Patentanspruch 1 und einen Multilevelumrichter mit den Merkmalen gemäß Patentanspruch 11 gelöst. Vorteilhafte Ausgestaltungen des erfindungsgemäßen Multilevelumrichters sind in Unteransprüchen angegeben.

Danach ist erfindungsgemäß vorgesehen, dass mindestens eines der Submodule zwei galvanisch miteinander in Verbindung stehende Teilmodule aufweist oder durch zwei galvanisch miteinander in Verbindung stehende Teilmodule gebildet ist, die jeweils einen ersten Schalter, einen zweiten Schalter und einen Kondensator sowie einen ersten und einen zweiten Teilmodulanschluss aufweisen, und die galvanische Verbindung zwischen den zwei Teilmodulen zumindest ein induktives Element umfasst.

Ein wesentlicher Vorteil des erfindungsgemäßen Multilevelumrichters ist darin zu sehen, dass mindestens eines der Submodule, vorzugsweise alle Submodule, durch Teilmodule gebildet sind, die zwar galvanisch miteinander in Verbindung stehen und insofern einen Entladestrom zwischen Teilmodulen ermöglichen, jedoch der Stromfluss im Falle eines Kurzschlusses durch das erfindungsgemäß vorgesehene zusätzliche induktive Element in der galvanischen Verbindung zwischen den Teilmodulen begrenzt wird. Der erfinderische Gedanke besteht also darin, die Submodule in Teilmodule aufzuspalten, die gemeinsam das für das Submodul geforderte elektrische Verhalten aufweisen; die Teilmodule sind für die Funktionalität des Submoduls zwar galvanisch (also elektrisch stromführend) miteinander verbunden, jedoch durch das zumindest eine induktive Element in der galvanischen Verbindung so weit elektrisch voneinander entkoppelt, dass im Falle eines Ausfalls eines der Teilmodule die anderen Teilmodule nur eingeschränkt betroffen sind.

Die Teilmodule des oder der Submodule sind vorzugsweise baugleich ausgeführt.

Der erste Schalter eines jeden Teilmoduls liegt vorzugsweise mit dem Kondensator in Reihe; der zweite Schalter eines jeden Teilmoduls ist vorzugsweise zu der Reihenschaltung aus dem ersten Kondensator und dem zweiten Kondensator parallel geschaltet. Der erste Teilmodulanschluss eines jeden Teilmoduls wird vorzugsweise durch die elektrische Verbindungsstelle zwischen den beiden Schaltern des Teilmoduls und der zweite Teilmodulanschluss eines jeden Teilmoduls vorzugsweise durch den elektrischen Verbindungspunkt zwischen dem Kondensator und dem zweiten Schalter gebildet.

Um eine ausreichende Trennung der Teilmodule im Hinblick darauf zu erreichen, dass ein Ausfall eines der Teilmodule das oder die übrigen Teilmodule nicht zu sehr in Mitleidenschaft zieht, wird es als vorteilhaft angesehen, wenn die Induktivität des induktiven Elements oder die Summe der Induktivitäten der induktiven Elemente in der galvanischen Verbindung zwischen den zwei Teilmodulen mindestens fünfmal, vorzugsweise mindestens zehnmal, so groß ist wie die Summe der in den zwei Teilmodulen wirkenden parasitären Induktivitäten. Eine solche Dimensionierung der Induktivität des induktiven Elements stellt im Allgemeinen eine ausreichende elektrische Trennung der Teilmodule sicher.

Bezüglich der Anordnung des zumindest einen induktiven Elements wird es als vorteilhaft angesehen, wenn die ersten Teilmodulanschlüsse der Teilmodule jeweils galvanisch mit einem ersten Submodulanschluss des Submoduls sowie miteinander verbunden sind und die zweiten Teilmodulanschlüsse jeweils galvanisch mit einem zweiten Submodulanschluss des Submoduls sowie miteinander verbunden sind, wobei die galvanische Verbindung zwischen den beiden ersten Teilmodulanschlüssen und/oder zwischen den beiden zweiten Teilmodulanschlüssen zumindest ein induktives Element umfasst. Auch bei dieser Anordnung des induktiven Elements ist es besonders vorteilhaft, wenn die Induktivität des induktiven Elements oder die Summe der Induktivitäten der induktiven Elemente in der galvanischen Verbindung zwischen den beiden ersten Teilmodulanschlüssen und/oder zwischen den beiden zweiten Teilmodulanschlüssen mindestens fünfmal, vorzugsweise mindestens zehnmal, so groß ist wie die Summe der in den zwei Teilmodulen wirkenden parasitären Induktivitäten.

Um zu erreichen, dass die Kondensatorspannungen der Kondensatoren der Teilmodule stets zumindest annähernd gleich groß sind, wird es als vorteilhaft angesehen, dass die Teilmodule jeweils einen dritten Teilmodulanschluss aufweisen und die Kondensatoren der Teilmodule über diese dritten Teilmodulanschlüsse untereinander hochohmig und/oder hochinduktiv galvanisch verbunden sind. Über die dritten Teilmodulanschlüsse ist ein Ausgleichsstrom zwischen den Kondensatoren der Teilmodule möglich, wobei jedoch aufgrund der Hochohmigkeit bzw. der hohen Induktivität zwischen den dritten Teilmodulanschlüssen sichergestellt ist, dass auch im Falle eines Ausfalls eines der Teilmodule die übrigen Teilmodule ausreichend geschützt sind.

Im Falle einer hochohmigen Verbindung der dritten Teilmodulanschlüsse untereinander wird es als vorteilhaft angesehen, dass der Betrag des ohmschen Widerstands zwischen den Kondensatoren der zwei Teilmodule mindestens um den Faktor $10^5$ größer ist als der Betrag der Impedanz des induktiven Elements bei Netzfrequenz, also bei üblicherweise 50 Hz oder 60 Hz, oder die Summe der Beträge der Impedanzen der induktiven Elemente bei Netzfrequenz in der oder den galvanischen Verbindungen zwischen den zwei Teilmodulen.

Für den Fall, dass das Submodul besonders hohe Ausgangsleistungen bereitstellen soll, wird es als vorteilhaft angesehen, wenn das Submodul aus mehr als zwei Teilmodulen gebildet wird, demgemäß ist bei einer besonders bevorzugten Ausgestaltung vorgesehen, dass das mindestens eine Submodul neben den zwei Teilmodulen weitere Teilmodule aufweist, die jeweils einen ersten Schalter, einen zweiten Schalter und einen Kondensator sowie einen ersten und einen zweiten Teilmodulanschluss aufweisen, die ersten Teilmodulanschlüsse der weiteren Teilmodule jeweils galvanisch mit dem ersten Submodulanschluss des Submoduls verbunden sind und die zweiten Teilmodulanschlüsse der weiteren Teilmodule jeweils galvanisch mit dem zweiten Submodulanschluss des Submoduls verbunden sind, wobei die galvanische Verbindung zwischen den ersten Teilmodulanschlüssen der weiteren Teilmodule und dem ersten Submodulanschluss und/oder die galvanische Verbindung zwischen den zweiten Teilmodulanschlüssen der weiteren Teilmodule und dem zweiten Submodulanschluss jeweils zumindest ein induktives Element umfasst.

Mit anderen Worten kann also vorgesehen sein, dass das mindestens eine Submodul eine Vielzahl an Teilmodulen aufweist, die jeweils einen ersten Schalter, einen zweiten Schalter und einen Kondensator sowie einen ersten und einen zweiten Teilmodulanschluss aufweisen, die ersten Teilmodulanschlüsse der Teilmodule jeweils galvanisch mit dem ersten Submodulanschluss des Submoduls verbunden sind und die zweiten Teilmodulanschlüsse der Teilmodule jeweils galvanisch mit dem zweiten Submodulanschluss des Submoduls verbunden sind, wobei die galvanische Verbindung zwischen den ersten Teilmodulanschlüssen der Teilmodule und dem ersten Submodulanschluss und die galvanische Verbindung zwischen den zweiten Teilmodulanschlüssen der Teilmodule und dem zweiten Submodulanschluss jeweils zumindest ein induktives Element umfasst.

Mit Blick auf einen Ausgleich der Kondensatorspannungen der Vielzahl an Teilmodulen wird es als vorteilhaft angesehen, wenn die Kondensatoren der Teilmodule hochohmig galvanisch verbunden sind und der Betrag des ohmschen Widerstands zwischen den Kondensatoren jeweils zweier miteinander verbundener Teilmodule jeweils mindestens um den Faktor $10^5$ größer ist als die Summe der Beträge der Impedanzen bei 50 Hz, die diejenigen induktiven Elemente bilden, die in den galvanischen Verbindungen zwischen diesen zwei Teilmodulen und den Submodulanschlüssen angeordnet sind.

Vorzugsweise ist die Summe der Induktivitäten der induktiven Elemente in der galvanischen Verbindung zwischen dem ersten Teilmodulanschluss und dem ersten Submodulanschluss und in der galvanischen Verbindung zwischen dem zweiten Teilmodulanschluss und dem zweiten Submodulanschluss für jedes der Teilmodule jeweils mindestens fünfmal, vorzugsweise mindestens zehnmal, so groß wie die Summe der in diesen Teilmodulen wirkenden parasitären Induktivitäten.

Besonders bevorzugt werden alle Submodule des Multilevelumrichters wie oben beschrieben ausgeführt, also aus Teilmodulen gebildet; demgemäß wird es als vorteilhaft angesehen, wenn alle Submodule des Multilevelumrichters jeweils mindestens zwei Teilmodule aufweisen oder durch mindestens zwei Teilmodule gebildet sind, die jeweils einen ersten Schalter, einen zweiten Schalter und einen Kondensator sowie einen ersten und einen zweiten Teilmodulanschluss aufweisen.

Das oder die induktiven Elemente werden vorzugsweise durch Drosseln gebildet. Alternativ ist es möglich, dass der oder die induktiven Elemente durch parasitäre Induktivitäten in den galvanischen Verbindungen zwischen den Teilmodulen gebildet werden.

Die Ansteuerung der Schalter der Teilmodule erfolgt vorzugsweise induktiv entkoppelt.

Bezüglich einer induktiven Entkopplung bei der Ansteuerung wird es als vorteilhaft angesehen, wenn das mindestens eine Submodul oder alle Submodule jeweils eine erste submoduleigene Treiberschaltung und eine zweite submoduleigene Treiberschaltung aufweisen und die ersten Schalter der Teilmodule induktiv entkoppelt von der ersten submoduleigenen Treiberschaltung und die zweiten Schalter der Teilmodule induktiv entkoppelt von der zweiten submoduleigenen Treiberschaltung angesteuert werden.

Besonders vorteilhaft ist es, wenn zwischen jedem ersten Schalter und der ersten submoduleigenen Treiberschaltung zur induktiven Entkopplung jeweils eine stromkompensierte Drossel und zwischen jedem zweiten Schalter und der zweiten submoduleigenen Treiberschaltung zur induktiven Entkopplung jeweils eine stromkompensierte Drossel angeordnet ist.

Bezüglich der Vorteile des erfindungsgemäßen Submoduls sei auf die obigen Ausführungen im Zusammenhang mit dem erfindungsgemäßen Multilevelumrichter verwiesen.

Die Erfindung wird nachfolgend anhand von Ausführungsbeispielen näher erläutert; dabei zeigen beispielhaft:

Figur 1    ein Ausführungsbeispiel für einen Multilevelumrichter, der mit einer Vielzahl an Submodulen ausgestattet ist,

Figur 2    zur allgemeinen Erläuterung ein vorbekanntes Submodul, das bei dem Multilevelumrichter gemäß Figur 1 zur Bildung eines vorbekannten Multilevelumrichters eingesetzt werden kann,

Figur 3    ein Ausführungsbeispiel für ein erfindungsgemäßes Submodul, das bei Einsatz bei dem Multilevelumrichter gemäß Figur 1 zu einem erfindungsgemäßen Multilevelumrichter führt,

Figur 4    ein Ausführungsbeispiel für ein erfindungsgemäßes Submodul mit zwei induktiven Elementen,

Figur 5    ein weiteres Ausführungsbeispiel für ein erfindungsgemäßes Submodul mit zwei induktiven Elementen,

Figur 6    ein Ausführungsbeispiel für ein erfindungsgemäßes Submodul mit vier induktiven Elementen,

Figur 7    ein Ausführungsbeispiel für ein erfindungsgemäßes Submodul, das die Erzeugung bipolarer Ausgangsspannungen ermöglicht, und

Figur 8    ein Ausführungsbeispiel für die Ansteuerung von Schaltern der Submodule gemäß den Figuren 3 bis 7.

In den Figuren werden der Übersicht halber für identische oder vergleichbare Komponenten stets dieselben Bezugszeichen verwendet.

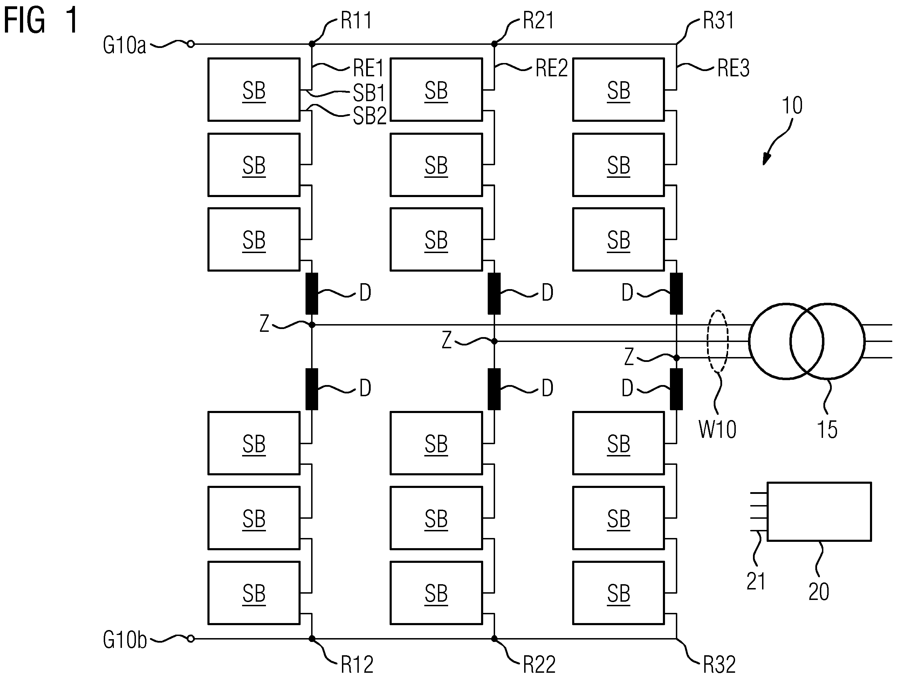

In der Figur 1 ist ein Ausführungsbeispiel für einen dreiphasigen Multilevelumrichter 10 gezeigt. Dieser umfasst Wechselspannungsanschlüsse W10 zum Einspeisen oder Ausspeisen bzw. Entnehmen von Wechselstrom. Darüber hinaus ist der Multilevelumrichter 10 mit zwei Spannungsanschlüssen G10a und G10b ausgestattet, die als Gleichspannungsanschlüsse bezeichnet werden.

Der Multilevelumrichter 10 weist drei parallel geschaltete Reihenschaltungen RE1, RE2 und RE3 auf, deren äußere Anschlüsse R11, R21 und R31 mit dem Gleichspannungsanschluss G10a in Verbindung stehen. Die äußeren Anschlüsse R12, R22 und R32 sind mit dem Gleichspannungsanschluss G10b verbunden. Mit anderen Worten bilden also die äußeren Anschlüsse der drei Reihenschaltungen RE1, RE2 und RE3 die Gleichspannungsseite des Multilevelumrichters 10.

Jede der drei Reihenschaltungen RE1, RE2 und RE3 ist jeweils mit einer Vielzahl an in Reihe geschalteten Submodulen SB sowie zwei Induktivitäten D ausgestattet. Jeweils zwischen den zwei Induktivitäten D befindet sich ein Zwischenanschluss Z, der potentialmäßig zwischen den in der Figur 1 oberen Submodulen und den in Figur 1 unteren Submodulen liegt und einen der drei Wechselspannungsanschlüsse W10 des Multilevelumrichters 10 bildet. Die drei Wechselspannungsanschlüsse W10 können beispielsweise an einen Generator 15 angeschlossen sein.

In der Figur 1 lässt sich darüber hinaus beispielhaft der Anschluss bzw. die Verschaltung der Submodule SB erkennen. Jedes der Submodule SB ist jeweils mit einem ersten Submodulanschluss SB1 und einem zweiten Submodulanschluss SB2 ausgestattet.

Die Ansteuerung der Submodule SB erfolgt bei dem Multilevelumrichter 10 gemäß Figur 1 durch eine Zentraleinrichtung 20. Die zur Ansteuerung durch die Zentraleinrichtung 20 vorgesehenen Verbindungen zwischen der Zentraleinrichtung 20 und den Submodulen SB sind aus Gründen der Übersicht in der Figur 1 nicht gezeigt, sondern nur schematisch mittels Linien 21 angedeutet.

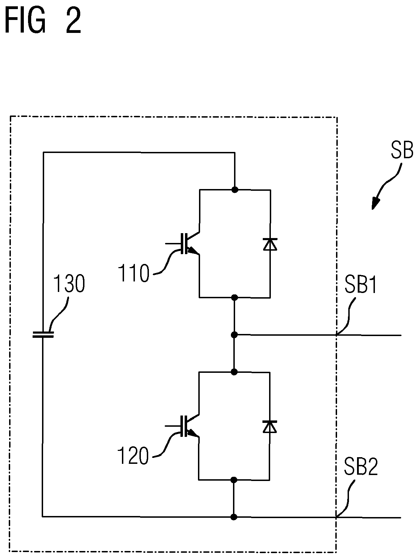

Die Figur 2 zeigt zum besseren Verständnis der nachfolgenden Ausführungen ein Submodul SB, wie es bei dem aus der eingangs genannten Druckschrift vorbekannten Multilevelumrichter eingesetzt wird. Das Submodul SB weist einen ersten Schalter 110, einen zweiten Schalter 120, einen Kondensator 130, einen ersten Submodulanschluss SB1 und einen zweiten Submodulanschluss SB2 auf. Fällt bei dem Submodul einer der Schalter 110 oder 120 aus und schalten beide Schalter gleichzeitig durch, so wird die gesamte in dem Kondensator 130 gespeicherte Energie freigesetzt, so dass es zu einer mechanischen Zerstörung des Submoduls SB sowie unter Umständen zu einer mechanischen Zerstörung benachbarter Submodule kommen kann.

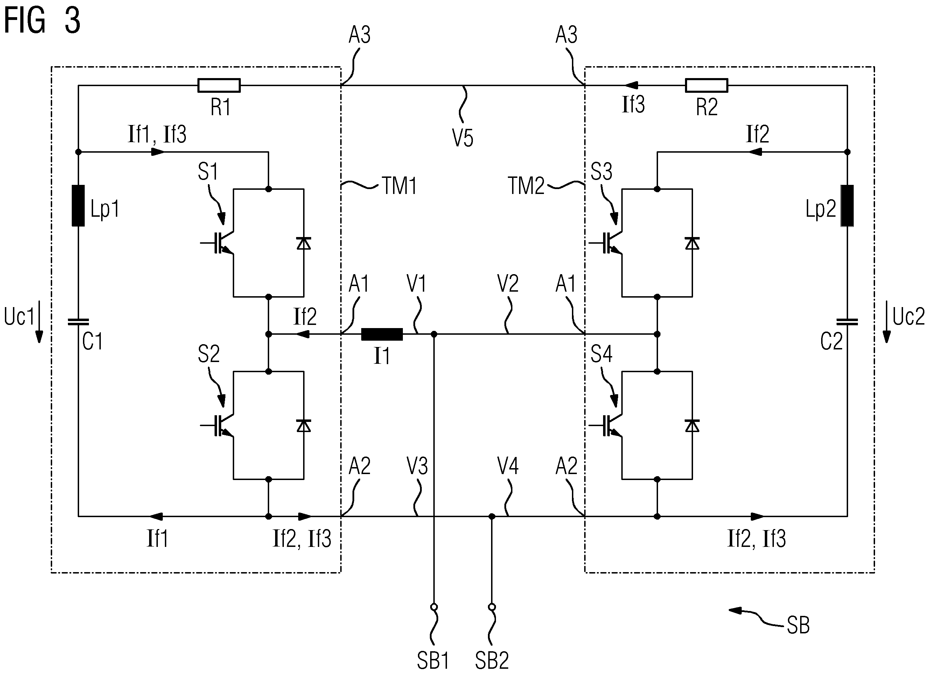

Die Figur 3 zeigt ein erstes Ausführungsbeispiel für ein erfindungsgemäßes Submodul SB, das zwei Teilmodule TM1 und TM2 aufweist und bei dem Multilevelumrichter 10 gemäß Figur 1 zur Bildung eines erfindungsgemäßen Multilevelumrichters eingesetzt werden kann.

Das Teilmodul TM1 weist einen ersten Schalter S1, einen zweiten Schalter S2, einen Kondensator C1 sowie einen ohmschen Widerstand R1 auf. Die beiden Schalter S1 und S2 werden vorzugsweise jeweils durch einen Transistor und eine parallel zu dem jeweiligen Transistor geschaltete Diode gebildet.

Der erste Schalter S1 ist mit dem Kondensator C1 in Reihe geschaltet; die Reihenschaltung aus dem Schalter S1 und dem Kondensator C1 liegt parallel zum zweiten Schalter S2.

Ein erster Teilmodulanschluss A1 des Teilmoduls TM1 ist elektrisch an die Verbindungsstelle zwischen den beiden Schaltern S1 und S2 angeschlossen. Ein zweiter Teilmodulanschluss A2 ist elektrisch an die Verbindungsstelle zwischen dem zweiten Schalter S2 und dem Kondensator C1 angeschlossen.

Bei dem Ausführungsbeispiel gemäß Figur 3 ist das Teilmodul TM1 zusätzlich auch mit einem dritten Teilmodulanschluss A3 ausgestattet, der elektrisch an einen ohmschen Widerstand R1 des Teilmoduls TM1 angeschlossen ist und über diesen ohmschen Widerstand R1 mit dem Kondensator C1 in Verbindung steht.

Das Teilmodul TM2 ist vorzugsweise zu dem Teilmodul TM1 baugleich. So weist das Teilmodul TM2 bevorzugt ebenfalls einen ersten Schalter S3, einen zweiten Schalter S4, einen Kondensator C2 sowie einen ohmschen Widerstand R2 auf. Die beiden Schalter S3 und S4, der Kondensator C2 sowie der ohmsche Widerstand R2 sind vorzugsweise in derselben Art und Weise verschaltet, wie dies bei dem Teilmodul TM1 der Fall ist; bezüglich der Verschaltung der Komponenten des Teilmoduls TM2 sei somit auf die obigen Ausführungen im Zusammenhang mit der Verschaltung der Komponenten des Teilmoduls TM1 verwiesen.

In den beiden Teilmodulen TM1 und TM2 wirken jeweils parasitäre Induktivitäten, die in der Darstellung gemäß Figur 3 mit dem Bezugszeichen Lp1 und Lp2 gekennzeichnet sind.

Der erste Teilmodulanschluss A1 des Teilmoduls TM1 ist mit dem ersten Teilmodulanschluss A1 des Teilmoduls TM2 galvanisch verbunden und bildet mit diesem einen ersten Submodulanschluss SB1 des Submoduls SB. Die galvanische Verbindungsleitung zwischen dem ersten Teilmodulanschluss A1 des Teilmoduls TM1 und dem ersten Submodulanschluss SB1 des Submoduls SB ist in der Figur 3 mit dem Bezugszeichen V1 gekennzeichnet. Die galvanische Verbindungsleitung zwischen dem ersten Teilmodulanschluss A1 des Teilmoduls TM2 und dem ersten Submodulanschluss SB1 trägt in der Figur 3 das Bezugszeichen V2.

Die beiden zweiten Teilmodulanschlüsse A2 der beiden Teilmodule TM1 und TM2 sind ebenfalls miteinander über Verbindungsleitungen V3 und V4 sowie mit dem zweiten Submodulanschluss SB2 verbunden.

Die dritten Teilmodulanschlüsse A3 der beiden Teilmodule TM1 und TM2 sind über eine Verbindungsleitung V5 verbunden.

Im Normalbetrieb des Submoduls SB gemäß Figur 3 werden die beiden ersten Schalter S1 und S3 der beiden Teilmodule TM1 und TM2 jeweils gemeinsam aus- und eingeschaltet; entsprechendes gilt für die beiden zweiten Schalter S2 und S4 der beiden Teilmodule TM1 und TM2. Das Ein- und Ausschalten der ersten und zweiten Schalter der beiden Teilmodule TM1 und TM2 erfolgt dabei jeweils abwechselnd dergestalt, dass bei jedem der beiden Teilmodule TM1 und TM2 jeweils entweder der erste Schalter S1 bzw. S3 oder der zweite Schalter S2 bzw. S4 eingeschaltet ist; der jeweils andere Schalter ist dann ausgeschaltet. Eine solche Ansteuerung stellt sicher, dass der Kondensator des jeweiligen Teilmoduls durch die jeweiligen Schalter des Teilmoduls nicht kurzgeschlossen und abrupt entladen wird.

Um - im Normalbetrieb des Submoduls SB - zu erreichen, dass die beiden Kondensatoren C1 und C2 der beiden Teilmodule TM1 und TM2 jeweils dieselbe Kondensatorspannung Uc1 bzw. Uc2 aufweisen, ist die Verbindungsleitung V5 vorgesehen, die einen Ausgleichsstrom zwischen den beiden Kondensatoren C1 und C2 über die beiden ohmschen Widerstände R1 und R2 ermöglicht; der Ausgleichsstrom führt mit anderen Worten dazu, dass die beiden Kondensatorspannungen Uc1 und Uc2 zumindest annähernd gleichgroß sein werden.

In der Figur 3 lässt sich darüber hinaus ein induktives Element I1 erkennen, das in der galvanischen Verbindungsleitung V1 vorgesehen ist. Bei dem induktiven Element I1 handelt es sich vorzugsweise um eine Drossel. Die Funktion des induktiven Elements I1 besteht darin, einen Entladestrom zwischen den beiden Teilmodulen TM1 und TM2 im Falle eines Fehlers oder Ausfalls eines der beiden Teilmodule zu reduzieren; dies soll nachfolgend anhand eines Beispiels näher erläutert werden:

Nachfolgend wird beispielhaft davon ausgegangen, dass die beiden ersten Schalter S1 und S3 der beiden Teilmodule TM1 und TM2 eingeschaltet sind und die beiden zweiten Schalter S2 und S4 der beiden Teilmodule TM1 und TM2 ausgeschaltet sind. Kommt es nun zu einem Ausfall des zweiten Schalters S2 des Teilmoduls TM1 und zu einem Durchschalten des zweiten Schalters S2, so wird der Kondensator C1 des Teilmoduls TM1 über den bereits eingeschalteten ersten Schalter S1 und den ausgefallenen zweiten Schalter S2 kurzgeschlossen und entladen. Der Entladestrom If1 fließt im Teilmodul TM1 somit durch den ersten Schalter S1 und den zweiten Schalter S2. Die Kapazität des Kondensators C1 ist bei dem Teilmodul TM1 vorzugsweise derart gewählt, dass der durch die beiden Schalter S1 und S3 fließende Entladestrom If1 zu keiner vollständigen mechanischen Zerstörung des Teilmoduls TM1 führen wird.

Das zweite Teilmodul TM2 wird von dem Ausfall des Teilmoduls TM1 ebenfalls betroffen. Durch den Ausfall des zweiten Schalters S2 des Teilmoduls TM1 wird nämlich ein Entladestrom If2 ermöglicht, mit dem der Kondensator C2 des Teilmoduls TM2 entladen wird. Dieser Entladestrom If2 fließt über den ersten Schalter S3 des Teilmoduls TM2 über die galvanischen Verbindungsleitungen V2 und V1 durch den zweiten Schalter S2 des Teilmoduls TM1 und anschließend über die Verbindungsleitungen V3 und V4 wieder zum Teilmodul TM2 zurück. Dieser Entladestrom If2 wird wirksam durch das induktive Element I1 begrenzt, das in der galvanischen Verbindungsleitung V1 vorgesehen ist und die Höhe des Entladestroms If2 auf einem unkritischen Niveau hält. Der Entladestrom If2 wird vorzugsweise auf einen Wert begrenzt, der eine Zerstörung des Teilmoduls TM2 ausschließt.

Um die beschriebene Funktion der Strombegrenzung durch das induktive Element I1 zu erreichen, ist die Induktivität L1 des induktiven Elements I1 vorzugsweise mindestens fünfmal, besonders bevorzugt mindestens zehnmal, so groß wie die Summe der in den zwei Teilmodulen wirkenden parasitären Induktivitäten Lp1 und Lp2. Es gilt also vorzugsweise:

$$\texttt{L1 > 5·Lp1 mit Lp1} \approx \texttt{Lp2}$$

Aufgrund der Verbindungsleitung V5 kann es neben dem Entladestrom If2 auch zu einem Entladestrom If3 kommen, durch den der Kondensator C2 über das Teilmodul TM1 entladen wird. Der Entladestrom If3 kann über den Widerstand R2 und über die Verbindungsleitung V5 zum Teilmodul TM1 fließen und über die beiden Verbindungsleitungen V3 und V4 wieder zurück zum Teilmodul TM2 gelangen. Um eine ausreichende Begrenzung des Entladestroms If3 sicherzustellen, sind die beiden ohmschen Widerstände R1 und R2 vorzugsweise derart bemessen, dass der Betrag des ohmschen Widerstandes Rges zwischen den beiden Kondensatoren C1 und C2 - also die Widerstandssumme der beiden ohmschen Widerstände R1 und R2 - mindestens um den Faktor $10^5$ größer ist als der Betrag der Impedanz des induktiven Elements I1 bei Netzfrequenz, die üblicherweise 50 oder 60 Hz beträgt. Es gilt also:

$$\texttt{Rges = R1 + R2 > } 10^5 {}^* \left| \texttt{2 * } \pi \texttt{ * 50Hz * L1} \right| \texttt{ bzw.}$$

$$\texttt{Reges > } 10^5 {}^* \left| \texttt{2}\pi\texttt{·* 50Hz·* 5 * Lp1} \right|$$

Zusammengefasst dienen die beiden ohmschen Widerstände R1 und R2 sowie das induktive Element I1 dazu, einen Entladestrom zwischen Teilmodulen zu begrenzen, falls eines der Teilmodule ausgefallen ist und elektrisch einen Kurzschluss darstellt.

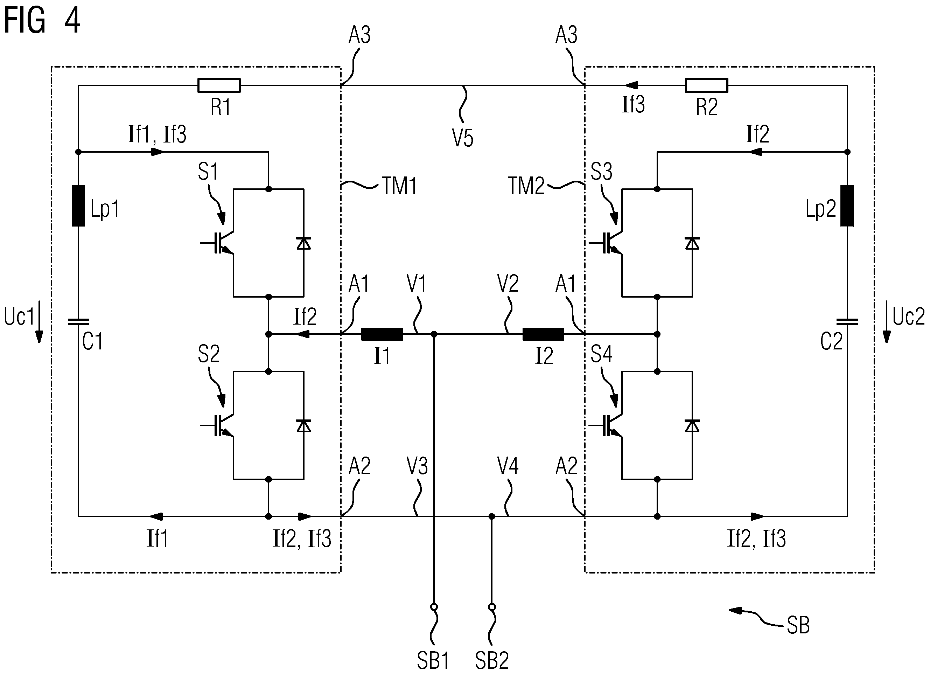

Die Figur 4 zeigt ein Ausführungsbeispiel für ein Submodul SB, das mit zwei induktiven Elementen I1 und I2 ausgestattet ist, die gemeinsam zur Strombegrenzung im Falle eines Ausfalls eines der Teilmodule dienen. Bei dem Ausführungsbeispiel gemäß Figur 4 ist ein induktives Element I1 in der galvanischen Verbindungsleitung V1 zwischen dem ersten Teilmodulanschluss A1 des Teilmoduls TM1 und dem ersten Submodulanschluss SB1 des Submoduls SB und ein zweites induktives Element I2 in der galvanischen Verbindungsleitung V2 zwischen dem ersten Teilmodulanschluss A1 des Teilmoduls TM2 und dem ersten Submodulanschluss SB1 des Submoduls SB angeordnet.

Die beiden induktiven Elemente I1 und I2 reduzieren den Entladestrom eines nicht ausgefallenen Teilmoduls im Falle des Ausfalls eines ausgefallenen anderen Teilmoduls, wie dies im Zusammenhang mit der Figur 3 oben bereits eingehend erläutert wurde. Die obigen Ausführungen im Zusammenhang mit der Figur 3 gelten für das Submodul gemäß Figur 4 also entsprechend.

Die Anordnung eines induktiven Elements jeweils in jeder Verbindungsleitung zwischen dem ersten Teilmodulanschluss A1 eines jeden Teilmoduls und dem ersten Submodulanschluss SB1 ist insbesondere dann von Vorteil, wenn das Submodul SB nicht nur mit zwei Teilmodulen TM1 und TM2, sondern mit weiteren Teilmodulen bzw. mit einer Vielzahl an Teilmodulen ausgestattet ist. Die Anordnung eines induktiven Elements pro Verbindungsleitung zwischen dem ersten Teilmodulanschluss A1 und dem ersten Submodulanschluss stellt stets sicher, dass im Falle eines Ausfalls eines der Teilmodule der Entladestrom der übrigen Teilmodule durch mindestens zwei induktive Elemente begrenzt wird.

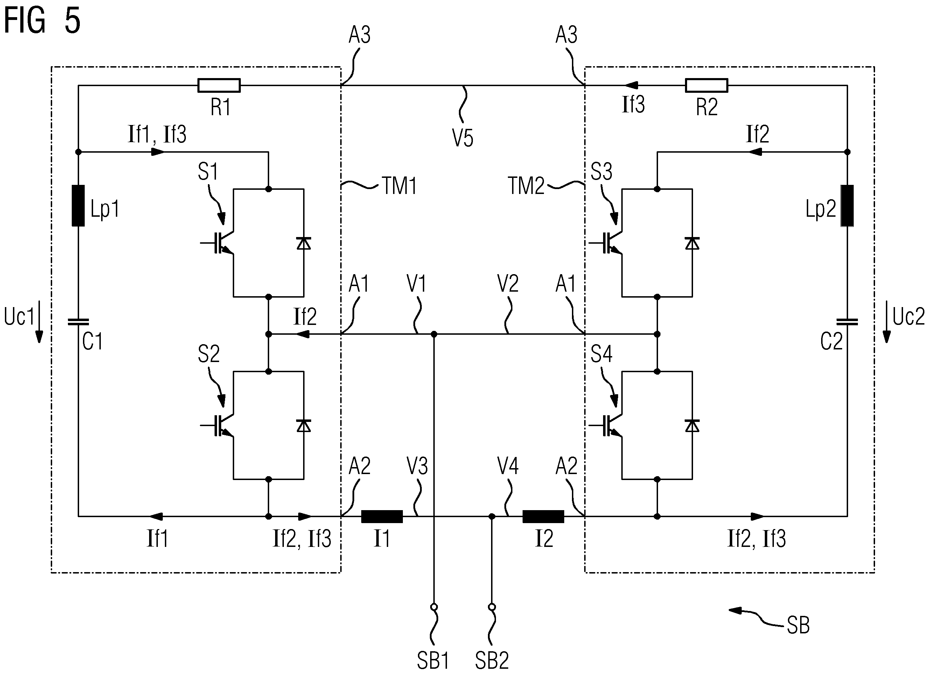

Die Figur 5 zeigt ein weiteres Ausführungsbeispiel für ein erfindungsgemäßes Submodul SB, das mit zwei induktiven Elementen I1 und I2 zur Strombegrenzung im Falle eines Fehlers ausgestattet ist. Im Unterschied zu dem Ausführungsbeispiel gemäß Figur 4 ist bei dem Submodul SB gemäß Figur 5 die Anordnung der beiden induktiven Elemente I1 und I2 anders gewählt. So lässt sich erkennen, dass die beiden induktiven Elemente I1 und I2 nicht in den galvanischen Verbindungsleitungen V1 und V2 zwischen den beiden ersten Teilmodulanschlüssen A1 der beiden Teilmodule TM1 und TM2 und dem ersten Submodulanschluss SB1 angeordnet sind, sondern statt dessen in den Verbindungsleitungen V3 und V4, die eine Verbindung zwischen den zweiten Teilmodulanschlüssen A2 und dem zweiten Submodulanschluss SB2 herstellen. Bezüglich der Funktionsweise der beiden induktiven Elemente I1 und I2 sei auf die obigen Ausführungen im Zusammenhang mit den beiden induktiven Elemente I1 und I2 gemäß Figur 4 bzw. des induktiven Elements I1 gemäß Figur 3 verwiesen.

Die Anordnung eines induktiven Elements jeweils in jeder Verbindungsleitung zwischen dem zweiten Teilmodulanschluss A2 eines jeden Teilmoduls und dem zweiten Submodulanschluss SB2 ist insbesondere dann von Vorteil, wenn das Submodul SB nicht nur mit zwei Teilmodulen TM1 und TM2, sondern mit weiteren Teilmodulen bzw. mit einer Vielzahl an Teilmodulen ausgestattet ist. Die Anordnung eines induktiven Elements pro Verbindungsleitung zwischen dem zweiten Teilmodulanschluss A2 und dem zweiten Submodulanschluss SB2 stellt stets sicher, dass im Falle eines Ausfalls eines der Teilmodule der Entladestrom der übrigen Teilmodule durch mindestens zwei induktive Elemente begrenzt wird.

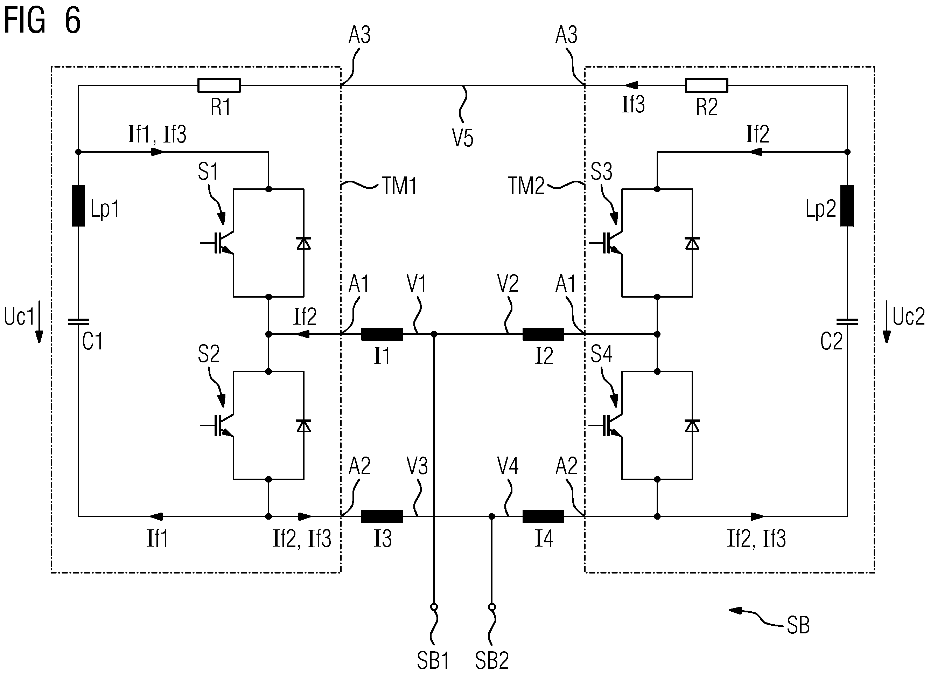

Die Figur 6 zeigt ein Ausführungsbeispiel für ein erfindungsgemäßes Submodul SB, bei dem jede der galvanischen Verbindungsleitungen V1, V2, V3 und V4 jeweils mit einem induktiven Element I1, I2, I3 bzw. I4 ausgestattet ist. Die vier induktiven Elemente I1 bis I4 dienen zur Strombegrenzung im Falle eines Ausfalls eines der Teilmodule, wie dies oben bereits im Zusammenhang mit den Figuren 3 bis 6 erläutert worden ist.

Die Anordnung eines induktiven Elements jeweils in jeder Verbindungsleitung zwischen dem ersten Teilmodulanschluss A1 eines jeden Teilmoduls und dem ersten Submodulanschluss SB1 sowie in jeder Verbindungsleitung zwischen dem zweiten Teilmodulanschluss A2 eines jeden Teilmoduls und dem zweiten Submodulanschluss SB2 ist insbesondere dann von Vorteil, wenn das Submodul SB nicht nur mit zwei Teilmodulen TM1 und TM2, sondern mit weiteren Teilmodulen bzw. mit einer Vielzahl an Teilmodulen ausgestattet ist. Die Anordnung zweier induktiver Elemente pro Teilmodul gewährleistet, dass im Falle eines Ausfalls eines der Teilmodule der Entladestrom der übrigen Teilmodule durch mindestens vier induktive Elemente begrenzt wird.

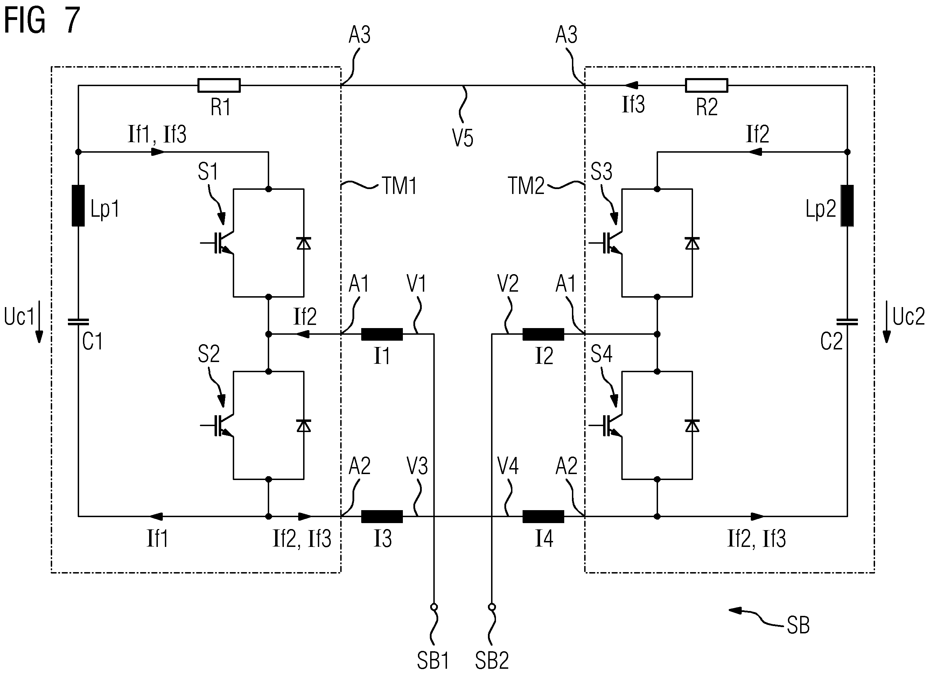

Die Figur 7 zeigt ein Ausführungsbeispiel für ein Submodul SB, das zur Erzeugung bipolarer Ausgangsspannungen geeignet ist. Wie sich in der Figur 7 erkennen lässt, ist der Anschluss der beiden Submodulanschlüsse SB1 und SB2 an die ersten und zweiten Teilmodulanschlüsse A1 bzw. A2 der Teilmodule TM1 und TM2 anders gewählt, wodurch die Erzeugung positiver sowie negativer Modulausgangsspannungen an den beiden Submodulanschlüssen SB1 und SB2 ermöglicht wird.

Die in den galvanischen Verbindungsleitungen V1 bis V4 vorgesehenen induktiven Elemente I1 bis I4 dienen zur Strombegrenzung der Entladeströme, die im Falle eines Ausfalls eines der Teilmodule auftreten können; diesbezüglich sei auf die obigen Ausführungen verwiesen.

Bei den Submodulen gemäß den Figuren 3 bis 7 können Notschalter (beispielsweise in Form von mechanischen Schaltern) vorgesehen sein, mit denen die Submodule im Falle eines Fehlers kurzgeschlossen werden können; solche Notschalter sind aus Gründen der Übersicht in den Figuren nicht dargestellt.

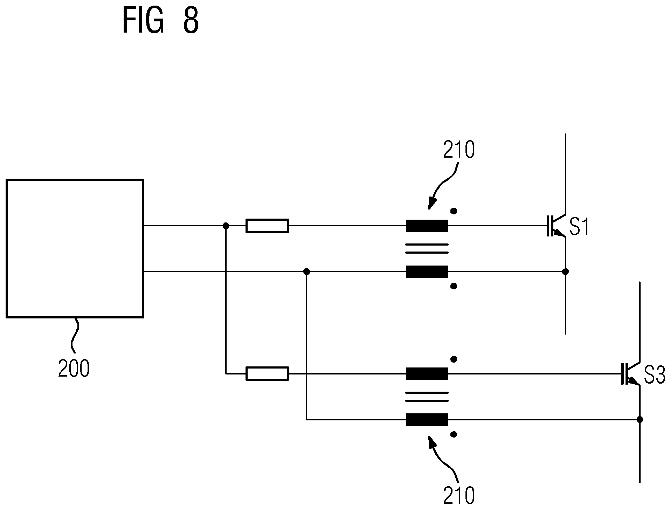

Die Figur 8 zeigt beispielhaft eine mögliche Ansteuerung der Schalter S1 bis S4 der beiden Teilmodule TM1 und TM2 gemäß den Figuren 3 bis 7 näher im Detail, und zwar anhand der Ansteuerung der beiden ersten Schalter S1 und S3 der beiden Teilmodule TM1 und TM2. Es lässt sich erkennen, dass das Submodul SB mit einer submoduleigenen Treiberschaltung 200 ausgestattet ist, die induktiv entkoppelt sowohl mit dem ersten Schalter S1 des Teilmoduls TM1 als auch mit dem ersten Schalter S3 des Teilmoduls TM2 verbunden ist. Die submoduleigene Treiberschaltung ermöglicht ein synchrones Ein- und Ausschalten der beiden ersten Schalter S1 und S3, wobei die Ansteuerung induktiv entkoppelt erfolgt. Die induktive Entkopplung basiert vorzugsweise auf stromkompensierten Drosseln, wie sie in der Figur 8 und dort mit dem Bezugszeichen 210 gekennzeichnet sind. Die stromkompensierten Drosseln 210 weisen vorzugsweise einen weichmagnetischen Kern auf.

Die Ansteuerung der beiden zweiten Schalter S2 und S4 der beiden Teilmodule TM1 und TM2 kann durch eine entsprechende submoduleigene Treiberschaltung erfolgen.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Bezugszeichenliste

| | |
|---|---|
| 10 | Multilevelumrichter |
| 15 | Generator |
| 20 | Zentraleinrichtung |
| 21 | Linien |
| 110 | Schalter |
| 120 | Schalter |
| 130 | Kondensator |
| 200 | Treiberschaltung |
| 210 | Drosseln |
| | |
| A1 | erster Teilmodulanschluss |
| A2 | zweiter Teilmodulanschluss |
| A3 | dritter Teilmodulanschluss |
| C1 | Kondensator |
| C2 | Kondensator |
| D | Induktivität |
| G10a | Spannungsanschluss |
| G10b | Spannungsanschluss |
| I1 | induktives Element |
| I2 | induktives Element |
| I3 | induktives Element |
| I4 | induktives Element |
| If1 | Entladestrom |
| If2 | Entladestrom |
| If3 | Entladestrom |
| L1 | Induktivität |
| Lp1 | Induktivität |
| Lp2 | Induktivität |
| RE1 | Reihenschaltung |
| R11 | äußerer Anschluss der Reihenschaltung R1 |
| R12 | äußerer Anschluss der Reihenschaltung R1 |
| RE2 | Reihenschaltung |
| R21 | äußerer Anschluss der Reihenschaltung R2 |
| R22 | äußerer Anschluss der Reihenschaltung R2 |
| RE3 | Reihenschaltung |
| R31 | äußerer Anschluss der Reihenschaltung R3 |
| R32 | äußerer Anschluss der Reihenschaltung R3 |
| R1 | ohmscher Widerstand |
| R2 | ohmscher Widerstand |
| SB | Submodul |
| SB1 | erster Submodulanschluss |
| SB2 | zweiter Submodulanschluss |
| S1 | erster Schalter |
| S2 | zweiter Schalter |
| S3 | erster Schalter |
| S4 | zweiter Schalter |
| TM1 | Teilmodul |
| TM2 | Teilmodul |
| Uc1 | Kondensatorspannung |
| Uc2 | Kondensatorspannung |
| V1 | Verbindungsleitung |
| V2 | Verbindungsleitung |
| V3 | Verbindungsleitung |
| V4 | Verbindungsleitung |

V5          Verbindungsleitung
W10        Wechselspannungsanschlüsse
Z           Zwischenanschluss


**Patentansprüche**

1.  Submodul für einen Multilevelumrichter (10),
    wobei

        - das Submodul (SB) zwei galvanisch miteinander in Verbindung stehende Teilmodule (TM1, TM2) aufweist
        oder durch zwei galvanisch miteinander in Verbindung stehende Teilmodule (TM1, TM2) gebildet ist,
        die jeweils einen ersten Schalter, einen zweiten Schalter und einen Kondensator sowie einen ersten und einen
        zweiten Teilmodulanschluss aufweisen,
        wobei der erste Schalter mit dem Kondensator in Reihe geschaltet ist und die Reihenschaltung aus dem ersten
        Schalter und dem Kondensator parallel zu dem zweiten Schalter liegt, und
        - die galvanische Verbindung zwischen den zwei Teilmodulen (TM1, TM2) zumindest ein induktives Element
        (I1, I2, I3, I4) umfasst,

    **dadurch gekennzeichnet, dass**

        - die Teilmodule (TM1, TM2) jeweils einen dritten Teilmodulanschluss (A3) aufweisen,
        - der jeweils dritte Teilmodulanschluss (A3) über einen ohmschen Widerstand (R1, R2) mit dem Kondensator
        (C1, C2) des jeweiligen Teilmoduls (TM1, TM2) elektrisch verbunden ist, und
        - die dritten Teilmodulanschlüsse (A3) mittels einer weiteren galvanischen Verbindung (V5) elektrisch verbunden
        sind, so dass die Kondensatoren (C1, C2) der Teilmodule (TM1, TM2) galvanisch verbunden sind, wobei
        - der Betrag der Summe der ohmschen Widerstände zwischen den Kondensatoren (C1, C2) der zwei Teilmodule
        (TM1, TM2) mindestens um den Faktor $10^5$ größer ist als der Betrag der Impedanz des induktiven Elements
        (I1, I2, I3, I4) bei 50 Hz oder die Summe der Beträge der Impedanzen der induktiven Elemente (I1, I2, I3, I4)
        bei 50 Hz in der oder den galvanischen Verbindungen (V1, V2, V3, V4) zwischen den zwei Teilmodulen (TM1,
        TM2) .

2.  Submodul (10) nach Anspruch 1,
    **dadurch gekennzeichnet, dass** die Induktivität (L1) des induktiven Elements (I1, I2, I3, I4) oder die Summe der
    Induktivitäten der induktiven Elemente (I1, I2, I3, I4) in der galvanischen Verbindung (V1, V2, V3, V4) zwischen den
    zwei Teilmodulen (TM1, TM2) mindestens fünfmal, vorzugsweise mindestens zehnmal, so groß ist wie die Summe
    der in den zwei Teilmodulen (TM1, TM2) wirkenden parasitären Induktivitäten (Lp1, Lp2).

3.  Submodul (10) nach einem der voranstehenden Ansprüche,
    **dadurch gekennzeichnet, dass**

        - die ersten Teilmodulanschlüsse (A1) der Teilmodule (TM1, TM2) jeweils galvanisch mit einem ersten Submodulanschluss (SB1) des Submoduls (SB) sowie miteinander verbunden sind und
        - die zweiten Teilmodulanschlüsse (A2) jeweils galvanisch mit einem zweiten Submodulanschluss (SB2) des
        Submoduls (SB) sowie miteinander verbunden sind,
        - wobei die galvanische Verbindung (V1, V2, V3, V4) zwischen den beiden ersten Teilmodulanschlüssen (A1)
        und/oder zwischen den beiden zweiten Teilmodulanschlüssen (A2) zumindest ein induktives Element (I1, I2,
        I3, I4) umfasst.

4.  Submodul (10) nach Anspruch 3, **dadurch gekennzeichnet, dass**
    die Induktivität (L1) des induktiven Elements (I1, I2, I3, I4) oder die Summe der Induktivitäten der induktiven Elemente
    (I1, I2, I3, I4) in der galvanischen Verbindung (V1, V2, V3, V4) zwischen den beiden ersten Teilmodulanschlüssen
    (A1) und/oder zwischen den beiden zweiten Teilmodulanschlüssen (A2) mindestens fünfmal, vorzugsweise mindestens zehnmal, so groß ist wie die Summe der in den zwei Teilmodulen (TM1, TM2) wirkenden parasitären
    Induktivitäten (Lp1, Lp2).

5.  Submodul (10) nach einem der voranstehenden Ansprüche,
    **dadurch gekennzeichnet, dass**

- das mindestens eine Submodul (SB) neben den zwei Teilmodulen (TM1, TM2) weitere Teilmodule aufweist, die jeweils einen ersten Schalter, einen zweiten Schalter und einen Kondensator sowie einen ersten und einen zweiten Teilmodulanschluss (A1, A2) aufweisen,
- die ersten Teilmodulanschlüsse (A1) der weiteren Teilmodule jeweils galvanisch mit dem ersten Submodulanschluss (SB1) des Submoduls (SB) verbunden sind und
- die zweiten Teilmodulanschlüsse (A2) der weiteren Teilmodule jeweils galvanisch mit dem zweiten Submodulanschluss (SB2) des Submoduls (SB) verbunden sind,
- wobei die galvanische Verbindung zwischen den ersten Teilmodulanschlüssen (A1) der weiteren Teilmodule und dem ersten Submodulanschluss (SB1) und/oder die galvanische Verbindung zwischen den zweiten Teilmodulanschlüssen (A2) der weiteren Teilmodule und dem zweiten Submodulanschluss (SB2) jeweils zumindest ein induktives Element (I1, I2, I3, I4) umfasst.

6. Submodul (10) nach einem der voranstehenden Ansprüche,
   **dadurch gekennzeichnet, dass**

   - das mindestens eine Submodul (SB) eine Vielzahl an Teilmodulen (TM1, TM2) aufweist, die jeweils einen ersten Schalter, einen zweiten Schalter und einen Kondensator sowie einen ersten und einen zweiten Teilmodulanschluss aufweisen,
   - die ersten Teilmodulanschlüsse (A1) der Teilmodule (TM1, TM2) jeweils galvanisch mit dem ersten Submodulanschluss (SB1) des Submoduls (SB) verbunden sind und
   - die zweiten Teilmodulanschlüsse (A2) der Teilmodule (TM1, TM2) jeweils galvanisch mit dem zweiten Submodulanschluss (SB2) des Submoduls (SB) verbunden sind,
   - wobei die galvanische Verbindung zwischen den ersten Teilmodulanschlüssen (A1) der Teilmodule (TM1, TM2) und dem ersten Submodulanschluss (SB1) und die galvanische Verbindung zwischen den zweiten Teilmodulanschlüssen (A2) der Teilmodule (TM1, TM2) und dem zweiten Submodulanschluss (SB2) jeweils zumindest ein induktives Element (I1, I2, I3, I4) umfasst.

7. Submodul (10) nach Anspruch 6, **dadurch gekennzeichnet, dass**

   - die Kondensatoren (C1, C2) der Teilmodule (TM1, TM2) hochohmig galvanisch verbunden sind und
   - der Betrag des ohmschen Widerstands zwischen den Kondensatoren jeweils zweier miteinander verbundener Teilmodule (TM1, TM2) jeweils mindestens um den Faktor $10^5$ größer ist als die Summe der Beträge der Impedanzen bei 50 Hz, die diejenigen induktiven Elemente (I1, I2, I3, I4) bilden, die in den galvanischen Verbindungen (V1, V2, V3, V4) zwischen diesen zwei Teilmodulen (TM1, TM2) und den Submodulanschlüssen (SB1, SB2) angeordnet sind.

8. Submodul (10) nach einem der voranstehenden Ansprüche 6 bis 8,
   **dadurch gekennzeichnet, dass**
   die Summe der Induktivitäten der induktiven Elemente (I1, I2, I3, I4) in der galvanischen Verbindung zwischen dem ersten Teilmodulanschluss (A1) und dem ersten Submodulanschluss (SB1) und in der galvanischen Verbindung zwischen dem zweiten Teilmodulanschluss (A2) und dem zweiten Submodulanschluss (SB2) für jedes der Teilmodule (TM1, TM2) jeweils mindestens fünfmal, vorzugsweise mindestens zehnmal, so groß ist wie die Summe der in diesen Teilmodulen (TM1, TM2) wirkenden parasitären Induktivitäten (Lp1, Lp2).

9. Submodul (10) nach einem der voranstehenden Ansprüche,
   **dadurch gekennzeichnet, dass**
   das oder die induktiven Elemente (I1, I2, I3, I4) jeweils durch ein separates Element, insbesondere eine separate Drossel, gebildet sind.

10. Submodul (10) nach einem der voranstehenden Ansprüche 1-9,
    **dadurch gekennzeichnet, dass**
    das oder die induktiven Elemente (I1, I2, I3, I4) durch parasitäre Induktivitäten in den galvanischen Verbindungen zwischen den Teilmodulen (TM1, TM2) gebildet sind.

11. Multilevelumrichter (10) mit einer Mehrzahl an in Reihe geschalteten Submodulen (SB), die jeweils zumindest einen ersten Schalter, einen zweiten Schalter und einen Kondensator aufweisen, wobei mindestens eines der Submodule (SB) nach einem der voranstehenden Ansprüche gebildet ist.

**12.** Multilevelumrichter (10) nach Anspruch 11, **dadurch gekennzeichnet, dass** die Ansteuerung der Schalter der Teilmodule (TM1, TM2) induktiv entkoppelt erfolgt.

**13.** Multilevelumrichter (10) nach Anspruch 12, **dadurch gekennzeichnet, dass** das mindestens eine Submodul (SB) oder alle Submodule jeweils eine erste submoduleigene Treiberschaltung (200) und eine zweite submoduleigene Treiberschaltung aufweisen und die ersten Schalter (S1, S3) der Teilmodule (TM1, TM2) induktiv entkoppelt von der ersten submoduleigenen Treiberschaltung (200) und die zweiten Schalter der Teilmodule (TM1, TM2) induktiv entkoppelt von der zweiten submoduleigenen Treiberschaltung angesteuert werden.

**Claims**

**1.** Submodule for a multilevel converter (10), wherin

- the submodule (SB) comprises two partial modules (TM1, TM2) which are galvanically connected to one another or is formed by two partial modules (TM1, TM2) which are galvanically connected to one another and which each comprise a first switch, a second switch and a capacitor and also a first and a second partial module terminal, wherein the first switch is connected in series with the capacitor and the series connection formed by the first switch and the capacitor is connected in parallel with the second switch, and
- the galvanic connection between the two partial modules (TM1, TM2) comprises at least one inductive element (I1, I2, I3, I4)

**characterized in that**

- the partial modules (TM1, TM2) each comprise a third partial module terminal (A3),
- the respective third partial module terminal (A3) is electrically connected to the capacitor (C1, C2) of the respective partial module (TM1, TM2) via an ohmic resistance (R1, R2), and
- the third partial module terminals (A3) are electrically connected by means of a further galvanic connection (V5) such that the capacitors (C1, C2) of the partial modules (TM1, TM2) are galvanically connected, wherein
- the absolute value of the sum of the ohmic resistances between the capacitors (C1, C2) of the two partial modules (TM1, TM2) is at least a factor of $10^5$ greater than the absolute value of the impedance of the inductive element (I1, I2, I3, I4) at 50 Hz or the sum of the absolute values of the impedances of the inductive elements (I1, I2, I3, I4) at 50 Hz in the galvanic connection or galvanic connections (V1, V2, V3, V4) between the two partial modules (TM1, TM2).

**2.** Submodule (10) according to Claim 1,
**characterized in that**
the inductance (L1) of the inductive element (I1, I2, I3, I4) or the sum of the inductances of the inductive elements (I1, I2, I3, I4) in the galvanic connection (V1, V2, V3, V4) between the two partial modules (TM1, TM2) is at least five times, preferably at least ten times, the magnitude of the sum of the parasitic inductances (Lp1, Lp2) acting in the two partial modules (TM1, TM2).

**3.** Submodule (10) according to either of the preceding claims,
**characterized in that**

- the first partial module terminals (A1) of the partial modules (TM1, TM2) are each galvanically connected to a first submodule terminal (SB1) of the submodule (SB) and to one another, and
- the second partial module terminals (A2) are each galvanically connected to a second submodule terminal (SB2) of the submodule (SB) and to one another,
- wherein the galvanic connection (V1, V2, V3, V4) between the two first partial module terminals (A1) and/or between the two second partial module terminals (A2) comprises at least one inductive element (I1, I2, I3, I4).

**4.** Submodule (10) according to Claim 3,
**characterized in that**
the inductance (L1) of the inductive element (I1, I2, I3, I4) or the sum of the inductances of the inductive elements (I1, I2, I3, I4) in the galvanic connection (V1, V2, V3, V4) between the two first partial module terminals (A1) and/or between the two second partial module terminals (A2) is at least five times, preferably at least ten times, the magnitude of the sum of the parasitic inductances (Lp1, Lp2) acting in the two partial modules (TM1, TM2).

5. Submodule (10) according to any of the preceding claims, **characterized in that**

- the at least one submodule (SB) comprises besides the two partial modules (TM1, TM2) further partial modules each comprising a first switch, a second switch and a capacitor and also a first and a second partial module terminal (A1, A2),
- the first partial module terminals (A1) of the further partial modules are each galvanically connected to the first submodule terminal (SB1) of the submodule (SB), and
- the second partial module terminals (A2) of the further partial modules are each galvanically connected to the second submodule terminal (SB2) of the submodule (SB),
- wherein the galvanic connection between the first partial module terminals (A1) of the further partial modules and the first submodule terminal (SB1) and/or the galvanic connection between the second partial module terminals (A2) of the further partial modules and the second submodule terminal (SB2) comprise(s) in each case at least one inductive element (I1, I2, I3, I4).

6. Submodule (10) according to any of the preceding claims, **characterized in that**

- the at least one submodule (SB) comprises a multiplicity of partial modules (TM1, TM2) each comprising a first switch, a second switch and a capacitor and also a first and a second partial module terminal,
- the first partial module terminals (A1) of the partial modules (TM1, TM2) are each galvanically connected to the first submodule terminal (SB1) of the submodule (SB), and
- the second partial module terminals (A2) of the partial modules (TM1, TM2) are each galvanically connected to the second submodule terminal (SB2) of the submodule (SB),
- wherein the galvanic connection between the first partial module terminals (A1) of the partial modules (TM1, TM2) and the first submodule terminal (SB1) and the galvanic connection between the second partial module terminals (A2) of the partial modules (TM1, TM2) and the second submodule terminal (SB2) each comprise at least one inductive element (I1, I2, I3, I4).

7. Submodule (10) according to Claim 6,
**characterized in that**

- the capacitors (C1, C2) of the partial modules (TM1, TM2) are galvanically connected with high resistance, and
- the absolute value of the ohmic resistance between the capacitors of in each case two partial modules (TM1, TM2) connected to one another is in each case at least a factor of $10^5$ greater than the sum of the absolute values of the impedances at 50 Hz which are formed by those inductive elements (I1, I2, I3, I4) which are arranged in the galvanic connections (V1, V2, V3, V4) between said two partial modules (TM1, TM2) and the submodule terminals (SB1, SB2).

8. Submodule (10) according to any of the preceding Claims 6 to 8,
**characterized in that**
the sum of the inductances of the inductive elements (I1, I2, I3, I4) in the galvanic connection between the first partial module terminal (A1) and the first submodule terminal (SB1) and in the galvanic connection between the second partial module terminal (A2) and the second submodule terminal (SB2) for each of the partial modules (TM1, TM2) is in each case at least five times, preferably at least ten times, the magnitude of the sum of the parasitic inductances (Lp1, Lp2) acting in said partial modules (TM1, TM2).

9. Submodule (10) according to any of the preceding claims, **characterized in that** the inductive element or inductive elements (I1, I2, I3, I4) is or are formed in each case by a separate element, in particular a separate inductor.

10. Submodule (10) according to any of the preceding Claims 1-9,
**characterized in that**
the inductive element or inductive elements (I1, I2, I3, I4) is or are formed by parasitic inductances in the galvanic connections between the partial modules (TM1, TM2).

11. Multilevel converter (10) comprising a plurality of series-connected submodules (SB), which each comprise at least one first switch, one second switch and one capacitor, wherein at least one of the submodules (SB) is formed according to any of the preceding claims.

12. Multilevel converter (10) according to Claim 11,

**characterized in that**
the driving of the switches of the partial modules (TM1, TM2) is carried out in an inductively decoupled manner.

13. Multilevel converter (10) according to Claim 12,
**characterized in that** the at least one submodule (SB) or all of the submodules comprise(s) in each case a first submodule-specific driver circuit (200) and a second submodule-specific driver circuit, and the first switches (S1, S3) of the partial modules (TM1, TM2) are driven in an inductively decoupled manner by the first submodule-specific driver circuit (200) and the second switches of the partial modules (TM1, TM2) are driven in an inductively decoupled manner by the second submodule-specific driver circuit.

**Revendications**

1. Sous-module pour un mutateur (10) multi-niveaux,
dans lequel

- le sous-module (SB) a deux modules (TM1, TM2) partiels en liaison entre eux galvaniquement ou est formé de deux modules (TM1, TM2) partiels en liaison entre eux galvaniquement,
qui on chacun un premier interrupteur, un deuxième interrupteur et un condensateur, ainsi qu'une première et une deuxième bornes de module partiel,

dans lequel le premier interrupteur est monté en série avec le condensateur et le circuit série composé du premier interrupteur et du condensateur est en parallèle avec le deuxième interrupteur,
et

- la liaison galvanique entre les deux modules (TM1, TM2) partiels comprend au moins un élément (I1, I2, I3, I4) inductif,

**caractérisé en ce que**

- les modules (TM1, TM2) partiels ont chacun une troisième borne (A3) de module partiel,
- la troisième borne (A3) de module partiel est reliée électriquement au condensateur (C1, C2) du module (TM1, TM2) partiel respectif par une résistance (R1, R2) ohmique, et
- les troisièmes bornes (A3) de module partiel sont reliées électriquement au moyen d'une autre liaison (V5) galvanique, de manière à relier galvaniquement les condensateurs (C1, C2) des modules (TM1, TM2) partiels, dans lequel
- la valeur de la somme des résistance ohmiques, entre les condensateurs (C1, C2) des deux modules (TM1, TM2) partiels, est plus grande au moins du facteur $10^5$, que la valeur de l'impédance de l'élément (I1, I2, I3, I4) inductif à 50 Hz ou que la somme des valeurs des impédances des éléments (I1, I2, I3, I4) inductifs à 50 Hz dans la ou les liaisons (V1, V2, V3, V4) galvaniques entre les deux modules (TM1, TM2) partiels.

2. Sous-module (10) suivant la revendication 1,
**caractérisé en ce que** l'inductance (L1) de l'élément (I1, I2, I3, I4) inductif ou la somme des inductances des éléments (I1, I2, I3, I4) inductifs entre les deux modules (TM1, TM2) partiels est au moins cinq fois, de préférence au moins dix fois, aussi grande que la somme des inductances (Lp1, Lp2) parasites agissant dans les deux modules (TM1, TM2) partiels.

3. Sous-module (10) suivant l'une des revendications précédentes,
**caractérisé en ce que**

- les premières bornes (A1) des modules (TM1, TM2) partiels sont reliées chacune galvaniquement à une première borne (SB1) du sous-module (SB) ainsi qu'entre elles et
- le deuxièmes bornes (A2) du module partiel sont reliées respectivement galvaniquement à une deuxième borne (SB2) du sous-module (SB) ainsi qu'entre elles,
- dans lequel la liaison (V1, V2, V3, V4) galvanique, entre les deux premières bornes (A1) de modules partiels et/ou entre les deux deuxième bornes (A2) de modules partiels, comprend au moins un élément (I1, I2, I3, I4) inductif.

4.  Sous-module (10) suivant la revendication 3,
    **caractérisé en ce que**
    l'inductance (L1) de l'élément (I1, I2, I3, I4) inductif ou la somme des inductances des éléments (I1, I2, I3, I4) inductifs dans la liaison (V1, V2, V3, V4) galvanique entre les deux premières bornes (A1) de modules partiels et/ou entre les deux deuxième bornes (A2) de modules partiels est au moins cinq fois, de préférence au moins huit fois aussi grande que la somme des inductances (Lp1, Lp2) parasites agissant dans les deux modules (TM1, TM2) partiels.

5.  Sous-module (10) suivant l'une des revendications précédentes,
    **caractérisé en ce que**

    - le au moins un sous-module (SB) a outre les deux modules (TM1, TM2) partiels, d'autres modules partiels, qui ont chacun un premier interrupteur, un deuxième interrupteur et un condensateur, ainsi qu'une première et une deuxième bornes (A1, A2) de module partiel,
    - les premières bornes (A1) des autres modules partiels sont reliées chacune galvaniquement à la première borne (SB1) du sous-module (SB) et
    - les deuxième bornes (A2) des autres modules partiels sont reliées chacune galvaniquement à la deuxième borne (SB2) du sous-module (SB),
    - dans lequel la liaison galvanique entre les premières bornes (A1) des autres modules partiels et la première borne (SB1) du sous-module et/ou la liaison galvanique entre les deuxième bornes (A2) des autres modules partiels et la deuxième borne (SB2) du sous-module comprend respectivement au moins un élément (I1, I2, I3, I4) inductif.

6.  Sous-module (10) suivant l'une des revendications précédentes,
    **caractérisé en ce que**

    - le au moins un sous-module (SB) a une pluralité de modules (TM1, TM2) partiels, qui ont chacun un premier interrupteur, un deuxième interrupteur et un condensateur, ainsi qu'une première et une deuxième bornes de module partiel,
    - les premières bornes (A1) des modules (TM1, TM2) partiels sont reliées respectivement galvaniquement à la première borne (SB1) du sous-module (SB) et
    - les deuxièmes bornes (A2) modules (TM1, TM2) partiels sont reliées respectivement galvaniquement à la deuxième borne (SB2) du sous-module (SB),
    - dans lequel la liaison galvanique entre les premières bornes (A1) des modules (TM1, TM2) partiels et la première borne (SB1) du sous-module et la liaison galvanique entre les deuxième bornes (A2) des modules (TM1, TM2) partiels et la deuxième borne (SB2) du sous-module comprennent chacune au moins un élément (I1, I2, I3, I4) inductif.

7.  Sous-module (10) suivant la revendication 6,
    **caractérisé en ce que**

    - les condensateurs (C1, C2) des modules (TM1, TM2) partiels sont reliés galvaniquement à grande valeur ohmique et
    - la valeur de la résistance ohmique entre les condensateurs, respectivement de deux modules (TM1, TM2) partiels reliés entre eux, est respectivement plus grande au moins du facteur 105 que la somme des valeurs des impédances à 50 Hz, qui forment les éléments (I1, I2, I3, I4) inductifs montés dans les liaisons (V1, V2, V3, V4) galvaniques entre ces deux modules (TM1, TM2) partiels et les bornes (SB1, SB2) du sous-module.

8.  Sous-module (10) suivant l'une des revendications précédentes 6 à 8,
    **caractérisé en ce que**
    la somme des inductances des éléments (I1, I2, I3, I4) inductifs, dans la liaison galvanique entre la première borne (A1) de module partiel et la première borne (SB1) du sous-module et dans la liaison galvanique entre la deuxième borne (A2) de module partiel et la deuxième borne (SB2) du sous-module pour chacun des modules (TM1, TM2) partiels, est aussi grande respectivement qu'au moins cinq fois, de préférence au moins dix fois, que la somme des inductances (Lp1, Lp2) parasites agissant dans ces modules ((Tm1, TM2) partiels.

9.  Sous-module (10) suivant l'une des revendications précédentes,
    **caractérisé en ce que**
    l'élément ou les éléments (I1, I2, I3, I4) inductifs sont formés chacun d'un élément distinct, notamment d'une bobine de self distincte.

10. Sous-module (10) suivant l'une des revendications précédentes 1 à 9, **caractérisé en ce que** l'élément ou les éléments (I1, I2, I3, I4) inductifs sont formés d'inductances parasites dans les liaisons galvaniques entre les modules (TM1, TM2) partiels.

11. Mutateur (10) multi-niveaux ayant une pluralité de sous-modules (SB), qui sont montés en série et qui on chacun au moins un premier interrupteur , un deuxième interrupteur et un condensateur, au moins l'un des sous-modules (SB) étant formé suivant l'une des revendications précédentes.

12. Mutateur (10) multi-niveaux suivant la revendication 11, **caractérisé en ce que** la commande des interrupteurs des modules (TM1, TM2) partiels s'effectue de manière découplée par induction.

13. Mutateur (10) multi-niveaux suivant la revendication 12, **caractérisé en ce que** le au moins un sous-module (SB) ou tous les sous-modules ont chacun un premier circuit (200) d'attaque propre au sous-module et un deuxième circuit d'attaque propre au sous-module et les premiers interrupteurs (S1, S3) des modules (TM1, TM2) partiels sont commandés de manière découplée inductivement par le premier circuit (200) d'attaque propre au sous-module et les deuxième interrupteurs des modules (TM1, TM2) partiels sont commandés d'une manière découplée inductivement par le deuxième circuit d'attaque propre au sous-module.

FIG 1

# FIG 2

FIG 3

FIG 4

FIG 5

FIG 6

FIG 7

FIG 8

**IN DER BESCHREIBUNG AUFGEFÜHRTE DOKUMENTE**

**In der Beschreibung aufgeführte Patentdokumente**

- WO 2011116816 A1
- DE 102011006988 A1